# EUROPÄISCHE PATENTSCHRIFT

(11) **EP 2 562 102 B1**
(45) Veröffentlichungstag und Bekanntmachung des Hinweises auf die Patenterteilung: **02.04.2014**
(21) Anmeldenummer: 11178487.2
(22) Anmeldetag: 23.08.2011
(51) Int. Cl.: B65G 23/22

(54) **Bandförderanlage, Verfahren zu deren Betrieb sowie deren Verwendung**
Conveyer belt assembly, method for its operation and usage
Installation de transport à bande, son procédé de fonctionnement et d'utilisation

(43) Veröffentlichungstag der Anmeldung: 27.02.2013
(73) Patentinhaber: Siemens Aktiengesellschaft, 80333 München (DE); ThyssenKrupp Fördertechnik GmbH, 45143 Essen (DE); Thyssenkrupp Robins, Inc., Greenwood Village CO 80111 (US)
(72) Erfinder: Becker, Norbert, 91341 Röttenbach (DE); Brewka, Christof, 80126 Littleton Highlands Ranch (US); Dirscherl, Christian, 91058 Erlangen (DE); Hellmuth, Thorsten Dr., 91058 Erlangen (DE); Krieger, Wolf, 12161 Berlin (DE); Minor, Horst, 47443 Moers (DE); Sehl, Peter, 80209 Denver (US)
(74) Vertreter: Maier, Daniel Oliver

(56) Entgegenhaltungen:
- AU-B2- 558 538
- DE-A1-102008 026 243
- 'Advanced Drive System Saves up to 20% Energy' 22 August 2011, GERMANY, Seiten 1 - 12, XP055076615 DOI: A19199-E273-B198-X-7600

## Beschreibung

Die Erfindung betrifft eine Bandförderanlage für die Schwerindustrie, insbesondere für die Bergbauindustrie, umfassend zumindest eine Tragkonstruktion, ein Förderband und mindestens eine Antriebsvorrichtung zum Antrieb des Förderbands. Die Antriebsvorrichtung umfasst dabei mindestens eine Antriebswelle, mindestens eine Antriebswellen-Lageranordnung, mindestens eine Antriebsrolle und mindestens einen fremderregten Antriebsmotor in Form eines Frequenzumrichter-gespeisten Wechselstrom-Synchronmotors mit einem Stator und einem Rotor, wobei die Antriebswelle und der mindestens eine Antriebsmotor getriebelos miteinander verbunden sind, und wobei eine koaxiale Anordnung von Rotor und Antriebswelle vorliegt. Die Erfindung betrifft weiterein ein Verfahren zum Betrieb einer derartigen Bandförderanlage sowie deren Verwendung.

Bandförderanlagen der eingangs genannten Art sind bereits bekannt. So ist eine derartige Bandförderanlage bereits im Untertagebergwerk Prosper-Haniel in Bottrop, Deutschland, installiert, um abgebaute Kohle an die Oberfläche zu transportieren. Eine detaillierte Beschreibung dieser Bandförderanlage nach dem Oberbegriff des Anspruchs 1 ist in der Firmenbroschüre "Advanced Drive System Saves Up to 20% Energy", Order No. A19199-E273-B198-X-7600, der Siemens Aktiengesellschaft veröffentlicht. Die Bandförderanlage weist zwei Antriebsmotoren mit einer Nennleistung von je mehr als 3000 kW auf. Die Antriebswelle für das Förderband weist stirnseitig eine Anzahl an parallel zur Längsachse der Antriebswelle gerichtete Zapfen auf, auf welche der Rotor des Antriebsmotors seitlich aufgesteckt wird.

Es handelt sich um einen sogenannten Direktantrieb, bei dem sich zwischen Antriebsmotor(en) und Antriebswelle, keinerlei Bauteile befinden, die die Rotordrehzahl in eine davon abweichende Antriebswellendrehzahl übersetzen. Die Antriebswelle wird somit mit gleicher Drehzahl gedreht, wie diese vom Rotor bzw. den Rotoren vorgegeben wird. Sowohl die Antriebswelle wie auch der Stator des Antriebsmotors sind auf einer stabilen Tragkonstruktion angeordnet, um das für den ordnungsgemä-ßen Motorbetrieb erforderliche Spaltmaß zwischen Rotor und Stator sicherzustellen. Das Spaltmaß zwischen Rotor und Stator liegt bei einer derartigen Anwendung üblicherweise bei einem Wert von 5 bis 15 mm. Um einen ordnungsgemäßen Motorbetrieb sicherzustellen, liegt eine tolerierbare Verschiebung zwischen Rotor und Stator üblicherweise im Bereich von 10 bis 15% des Spaltmaßes.

Der Rotor, der hier aufgrund der hohen benötigten Nennleistung des Antriebsmotors eingesetzt wird, wiegt mehrere Tonnen, so dass die benötigten Lager für die Antriebswelle entsprechend stabil ausgelegt sind und die Zapfen an der Stirnseite der Antriebswelle einer enormen Belastung unterliegen. Dadurch gestaltet sich insbesondere eine Änderung der örtlichen Position der Bandförderanlage in einem Bergbaubetrieb als problematisch, da das Spaltmaß jederzeit zuverlässig eingehalten werden muss.

Es ist Aufgabe der Erfindung, eine Bandförderanlage mit Direktantrieb anzugeben, bei welcher das Spaltmaß zwischen Rotor und Stator besonders zuverlässig eingehalten wird, insbesondere auch im Falle einer Änderung der örtlichen Position der Bandförderanlage.

Weiterhin ist es Aufgabe der Erfindung, ein Verfahren zum Betrieb einer solchen Bandförderanlage sowie deren Verwendung anzugeben.

Die Aufgabe wird für die Bandförderanlage umfassend zumindest eine Tragkonstruktion, ein Förderband und mindestens eine Antriebsvorrichtung zum Antrieb des Förderbands, wobei die Antriebsvorrichtung mindestens eine Antriebswelle, mindestens eine Antriebswellen-Lageranordnung, mindestens eine Antriebsrolle und mindestens einen fremderregten Antriebsmotor in Form eines Frequenzumrichter-gespeisten Wechselstrom-Synchronmotors mit einem Stator und einem Rotor umfasst, wobei die Antriebswelle und der mindestens eine Antriebsmotor getriebelos miteinander verbunden sind, und wobei eine koaxiale Anordnung von Rotor und Antriebswelle vorliegt, dadurch gelöst, dass jede Antriebswelle durch mindestens einen Rotor geführt ist.

Dabei wird eine Antriebswelle als "durch einen Rotor geführt" angesehen, wenn diese in Richtung der Rotationsachse des Rotors
- den Rotor beidseitig überragt,
- den Rotor an einer Seite überragt und mit dem Rotor an der gegenüberliegenden Seite des Rotors abschließt, oder
- um mehr als 50% der Tiefenabmessung des Rotors in diesen hineingeführt ist.

Unter einer "Antriebswelle" wird hier generell eine sich drehende oder feststehende welle oder Achse verstanden.

Die erfindungsgemäße Bandförderanlage verzichtet auf eine seitliche Anordnung des Rotors oder der Rotoren an einer Antriebswelle unter Einsatz von Zapfen, wie dies im oben genannten Stand der Technik erfolgt ist. Der Rotor umgibt in der erfindungsgemäßen Ausführungsform die Antriebswelle, welche über diesen hinausragen oder auch mit diesem abschließen kann. Die massive Antriebswelle, die üblicherweise eine Vollwelle ist, besitzt aufgrund ihrer Dimensionen eine hohe Steifigkeit, welche zur Stabilisierung der Position des Rotors bzw. der Rotoren und somit zur Einhaltung des erforderlichen Spaltmaßes notwendig ist. Dadurch wird eine Durchbiegung der Antriebswelle und in Folge eine Relativbewegung zwischen Rotor und Antriebswelle unter Änderung des Spaltmaßes verhindert. Dies ermöglicht auch einen störungsfreien Transport einer erfindungsgemäßen Bandförderanlage zu einer veränderten örtlichen Position, z.B. innerhalb eines Rohstoff- oder Bergbaubetriebs, wie beispielsweise einer Mine, einer Sinteranlage, einer Pelletieranlage, einem Hafen usw.

Antriebsrollen, wie sie hier für die Antriebsvorrichtung eingesetzt werden, werden häufig auch als Antriebstrommeln bezeichnet. Als Förderbänder werden bevorzugt Bänder aus Kunststoff- oder Textilmaterialien, die auch armiert sein können, oder Metall eingesetzt. Dabei können durchwegs flexible Bänder oder auch abschnittsweise starre Bänder, wie beispielsweise Platten- oder Gliederbänder, zum Einsatz kommen. Das Förderband kann auf seiner Oberfläche glatt oder profiliert, beispielsweise mit Stollen usw., ausgeführt sein.

Als Frequenzumrichter wird insbesondere ein Frequenz-Direktumrichter oder ein Spannungs-Zwischenkreisumrichter eingesetzt.

Besonders geeignet ist eine derartige Bandförderanlage für die Schwerindustrie, insbesondere für die Rohstoff- oder Bergbauindustrie. Insbesondere wird sie zum Transport von Schüttgütern aller Art eingesetzt.

In einer besonders bevorzugten ersten Ausgestaltungsform umschließt der Rotor die Antriebswelle und ist mechanisch fest mit dieser verbunden, wobei weiterhin die Antriebswelle mit der mindestens einen Antriebsrolle mechanisch fest verbunden ist. Dabei bilden der Rotor bzw. auch die Rotoren, die damit verbundene Antriebswelle und die mindestens eine Antriebsrolle einen besonders stabilen Verbund, der insgesamt um die Längsachse der Antriebswelle drehbar ist.

Unter "mechanisch fest" werden hier und nachfolgend Verbindungen zwischen Bauteilen verstanden, wenn diese nicht gegeneinander verdrehbar sind. Es liegt eine kraft- oder formschlüssige Verbindung vor, beispielsweise mittels einer Verschraubung, einer Verkeilung, einer Aufschrumpfung, usw.

In einer alternativen zweiten Ausführungsform ist der Rotor seitlich an der Antriebsrolle angeordnet und mechanisch fest mit dieser verbunden ist. Dabei ist entweder die mit dem Rotor verbundene Antriebsrolle über mindestens eine Antriebsrollen-Lageranordnung mit der Antriebswelle verbunden, welche feststehend ausgebildet ist. Der Stator ist hierbei bevorzugt auf der feststehenden Antriebswelle angeordnet. Oder aber die mit dem Rotor verbundene Antriebsrolle ist alternativ mechanisch fest mit der Antriebswelle verbunden, wobei die Antriebswelle mittels der mindestens einen Antriebswellen-Lageranordnung drehbar gelagert ist und der Stator mit mindestens einer Antriebswellen-Lageranordnung mechanisch fest verbunden ist. Diese Versionen gewährleisten die sichere Einhaltung des erforderlichen Spaltmaßes zwischen Rotor und Stator.

Bei der ersten Ausführungsform hat es sich weiterhin bewährt, wenn die Antriebswelle mittels der mindestens einen Antriebswellen-Lageranordnung drehbar gelagert ist. Dabei ist der Stator bevorzugt mit mindestens einer Antriebswellen-Lageranordnung mechanisch fest verbunden. Alternativ ist der Stator mit der Tragkonstruktion mechanisch fest verbunden und weiterhin über mindestens eine Stator-Lageranordnung mit der drehbaren Antriebswelle verbunden, beispielsweise über eine Drehmomentenstütze. Auch diese Versionen gewährleisten die sichere Einhaltung des erforderlichen Spaltmaßes zwischen Rotor und Stator.

In dem Fall, dass die Antriebswelle mittels der mindestens einen Antriebswellen-Lageranordnung drehbar gelagert ist, ist es von Vorteil, wenn die Antriebswelle in Längsrichtung zweigeteilt ausgebildet ist, wobei ein der Antriebsrolle zugeordneter erster Antriebswellenabschnitt und ein dem Antriebsmotor zugeordneter zweiter Antriebswellenabschnitt vorhanden ist, welche über eine elastische Kupplungseinrichtung miteinander verbunden sind. Die elastische Kupplung gewährleistet eine identische Drehzahl von Rotor und Antriebswelle, ermöglicht dabei allerdings eine geringfügige Änderung der Längsachse des ersten Antriebswellenabschnitts gegenüber der Längsachse des zweiten Antriebswellenabschnitts, so dass ein gleichbleibendes Spaltmaß zwischen Rotor und Stator sichergestellt ist.

Dabei bedeutet der Begriff "elastisch" hierbei nicht, dass die Kupplungsanordnung immer ein Bauteil umfassen müsste, das aus einem elastischen Material gebildet ist. Vielmehr ist gemeint, dass ein Achs- oder Winkelversatz der beiden Antriebswellenabschnitte zueinander ausgeglichen werden kann. Als eine bevorzugte elastische Kupplungsanordnung kommt beispielsweise eine Bogenzahnkupplung zum Einsatz.

Dabei ist die Kupplungseinrichtung vorteilhaft zwischen einer Antriebswellen-Lageranordnung und einer dazu benachbart angeordneten Stator-Lageranordnung angeordnet. Dadurch ist eine einfache Zugänglichkeit der Kupplungseinrichtung gegeben. Dies ist insbesondere für die Wartung und Instandhaltung der Bandförderanlage relevant. Auch diese Versionen gewährleisten die sichere Einhaltung des erforderlichen Spaltmaßes zwischen Rotor und Stator.

In einer alternativen Ausführungsform der ersten Ausführungsform, bei welcher der Stator mit der Tragkonstruktion mechanisch fest verbunden und weiterhin über mindestens eine Stator-Lageranordnung mit der drehbaren Antriebswelle verbunden ist, ist die Antriebswelle bevorzugt in Längsrichtung zweigeteilt ausgebildet, wobei ein der Antriebsrolle zugeordneter erster Antriebswellenabschnitt und ein dem Antriebsmotor zugeordneter zweiter Antriebswellenabschnitt vorhanden ist, welche über eine Gelenkeinrichtung miteinander verbunden sind. Die Gelenkeinrichtung ist dabei bevorzugt zwischen einer Antriebswellen-Lageranordnung und einer Stator-Lageranordnung angeordnet, um eine leichte Zugänglichkeit der Gelenkeinrichtung zu erreichen. Dies ist insbesondere für die Wartung und Instandhaltung der Bandförderanlage relevant.

Alternativ kann die Gelenkeinrichtung aber auch zwischen zwei Stator-Lageranordnungen angeordnet sein. Dabei ist die Gelenkanordnung bevorzugt ins Innere eines Motorgehäuses des Antriebsmotors verlegt. Dadurch ist die Gelenkeinrichtung vor den rauen, äußeren Umgebungsbedingungen, die in einem Betrieb der Schwerindustrie in der Regel vorherrschen, geschützt angeordnet. Allerdings ist die Gelenkeinrichtung dort schwerer zugänglich. Auch diese Versionen gewährleisten die sichere Einhaltung des erforderlichen Spaltmaßes zwischen Rotor und Stator.

Es hat sich besonders bewährt, wenn die Tragkonstruktion der Bandförderanlage zumindest teilweise durch ein Traggerüst gebildet ist, welches mindestens eine Transporteinrichtung zur Veränderung der örtlichen Position der Bandförderanlage umfasst. Dadurch lässt sich die gesamte Bandförderanlage an einen anderen Einsatzort transportieren. Aufgrund der robusten Ausgestaltung der Antriebsvorrichtung führt ein derartiger Ortswechsel nicht zu einer Beschädigung des Antriebsmotors aufgrund einer Unterschreitung des erforderlichen Spaltmaßes.

Dabei hat es sich bewährt, wenn die Transporteinrichtung Kufen und/oder Räder umfasst. Im Falle eines Vorhandenseins von Kufen oder nicht eigens angetriebener Räder wird in der Regel eine gesonderte Zugmaschine benötigt, um die Bandförderanlage gleitend bzw. rollend an einen anderen Ort zu ziehen.

Es hat sich aber ebenso bewährt, wenn vorhandene Räder mittels mindestens eines, am Traggerüst angebrachten Antriebsmoduls antreibbar sind.

Alternativ oder in Kombination zu vorhandenen Kufen und/oder Rädern kann die mindestens eine Transporteinrichtung ein Raupenfahrwerk umfassen, welches dann üblicherweise mittels mindestens eines, am Traggerüst angebrachten Antriebsmoduls antreibbar ist. In beiden Fällen kann die Bandförderanlage aus eigener Kraft ihre örtliche Position verändern. Dabei kann sowohl eine Fernsteuerung des/der Antriebsmodule erfolgen oder ein Führerstand für Bedienpersonal im Bereich des Traggerüsts vorgesehen sein, so dass die Fortbewegung der Bandförderanlage inklusive des den Transport steuerndem Bedienpersonal erfolgt.

Selbstverständlich können erfindungsgemäße Bandförderanlagen aber auch ohne eine Transporteinrichtung ausgeführt sein, so dass ein herkömmliches Versetzen der Anlage mittels eines Krans oder Raupenfahrzeugs möglich ist.

Der Flächenbedarf der Antriebsvorrichtung ist aufgrund der kompakten Bauweise verringert, so dass dadurch der Transport der Bandförderanlage erleichtert und eine erfindungsgemäße Bandförderanlage auch an Einsatzorten mit schwierigen Platzverhältnissen eingesetzt werden kann.

Der fremderregte Antriebsmotor weist bevorzugt eine Nennleistung im Bereich von 1 bis 8 MW auf und ist für eine Anwendung im Freien geeignet, wobei Umgebungstemperaturen im Bereich von - 40°C bis + 50°C toleriert werden müssen. Der Rotor eines Antriebsmotors dreht sich im Betrieb bevorzugt mit einer Drehzahl im Bereich von bis zu 80 Umdrehungen pro Minute, insbesondere im Bereich von 30 bis 70 Umdrehungen pro Minute, insbesondere für Rohstoff- oder Bergbauanwendungen. Mittels des Frequenzumrichters ist die Drehzahl während des Betriebs der Bandförderanlage einstellbar bzw. jederzeit änderbar.

Die Aufgabe wird weiterhin für das Verfahren zum Betreiben einer erfindungsgemäßen Bandförderanlage gelöst, wobei das Förderband mit einer Fördergeschwindigkeit von kleiner als 13°m/s bevorzugt mit einer Fördergeschwindigkeit im Bereich von 3 bis 10 m/s, insbesondere im Bereich von 3 bis 8 m/s betrieben wird. Aufgrund des Einsatzes eines Frequenzumrichters kann die Fördergeschwindigkeit an die üblichen Fördergeschwindigkeiten für Bandförderanlagen in Rohstoff- oder Bergbaubetrieben angepasst werden.

Bevorzugt wird die örtliche Position der Bandförderanlage unter Einsatz der mindestens einen Transporteinrichtung verändert. Dadurch ist die Bandförderanlage mobil und je nach Bedarf schnell und unkompliziert an verschiedenen Orten einsetzbar.

Die Verwendung einer erfindungsgemäßen Bandförderanlage in der Schwerindustrie, insbesondere in der Rohstoff- oder Bergbauindustrie, zum Fördern von Material insbesondere Schüttgut mit einer Geschwindigkeit von kleiner als 13 m/s bevorzugt mit einer Geschwindigkeit im Bereich von 3 bis 10 m/s, insbesondere im Bereich von 3 bis 8 m/s ist ideal.

Insbesondere ist eine Verwendung der Bandförderanlage in Minenbetrieben, Sinteranlagen, Pelletieranlagen oder Häfen von Vorteil.

Die Figuren 1 bis 9 zeigen beispielhaft eine erfindungsgemäße Bandförderanlage und unterschiedliche dafür einsetzbare Antriebsvorrichtungen. So zeigt
- FIG 1: schematisch eine Bandförderanlage in dreidimensionaler Ansicht,
- FIG 2: schematisch eine erste Antriebsvorrichtung für eine Bandförderanlage im Längsschnitt,
- FIG 3: schematisch eine zweite Antriebsvorrichtung für eine Bandförderanlage im Längsschnitt,
- FIG 4: schematisch eine dritte Antriebsvorrichtung für eine Bandförderanlage im Längsschnitt,
- FIG 5: schematisch eine vierte Antriebsvorrichtung für eine Bandförderanlage im Längsschnitt,
- FIG 6: schematisch eine fünfte Antriebsvorrichtung für eine Bandförderanlage im Längsschnitt,
- FIG 7: schematisch eine sechste Antriebsvorrichtung für eine Bandförderanlage im Längsschnitt,
- FIG 8: schematisch eine siebente Antriebsvorrichtung für eine Bandförderanlage im Längsschnitt, und
- FIG 9: schematisch eine achte Antriebsvorrichtung für eine Bandförderanlage im Längsschnitt.

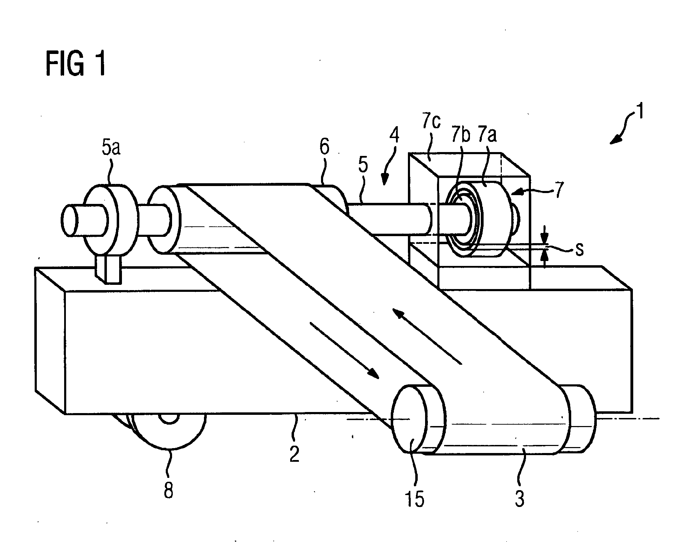

FIG 1 zeigt schematisch und lediglich beispielhaft eine Bandförderanlage 1 für die Schwerindustrie, insbesondere für die Rohstoff- oder Bergbauindustrie, in dreidimensionaler Ansicht. Die Bandförderanlage 1 umfasst eine Tragkonstruktion 2, ein Förderband 3 und eine Antriebsvorrichtung 4 zum Antrieb des Förderbands 3. Weiterhin ist mindestens eine Umlenkrolle 15 vorhanden, welche ebenfalls angetrieben sein kann und als weitere Antriebsrolle fungieren kann. Die Antriebsvorrichtung 4 umfasst eine Antriebswelle 5, mindestens eine Antriebswellen-Lageranordnung 5a, eine Antriebsrolle 6 und einen fremderregten Antriebsmotor 7 in Form eines Frequenzumrichter-gespeisten Wechselstrom-Synchronmotors mit einem Stator 7a und einem Rotor 7b. Der Rotor 7b und der schematisch im Schnitt dargestellte Stator 7a befinden sich in einem hier teiltransparent dargestellten Motorgehäuse 7c. Die Antriebswelle 5 und der Antriebsmotor 7 sind getriebelos miteinander verbunden, und wobei eine koaxiale Anordnung von Rotor 7b und Antriebswelle 5 vorliegt. Die Antriebswelle 5 ist durch den Rotor 7b hindurch geführt. Hier ragt die Antriebswelle 5 über den Rotor 7b hinaus. Die Antriebswelle 5 kann aber auch mit dem Rotor 7b abschließen oder innerhalb des Rotors 7b enden, sofern der Rotor 7b zum größten Teil die Antriebswelle 5 umgibt. Der Abstand zwischen dem Stator 7a und dem Rotor 7b wird als Spaltmaß S bezeichnet, dessen Einhaltung für den ordnungsgemäßen Betrieb des Antriebsmotors 7 entscheidend ist. An der Antriebswelle 5 kann optional auf der dem Antriebsmotor 7 abgewandten Seite ein weiterer Antriebsmotor angeordnet werden. Auch die die Anordnung weiterer Antriebsrollen 6 auf der Antriebswelle 5 ist möglich.

Zur Änderung der örtlichen Position der Bandförderanlage ist optional eine Transporteinrichtung 8 mit Rädern vorhanden, welche ein Ziehen der Bandförderanlage durch eine separate Zugmaschine oder bei vorhandenem Antrieb der Räder ein Bewegen der Bandförderanlage an einen anderen Aufstellungsort ermöglichen. Alternativ oder in Kombination zu den Rädern kann die Transporteinrichtung 8 auch mit Kufen und/oder einem Raupenfahrwerk ausgerüstet sein.

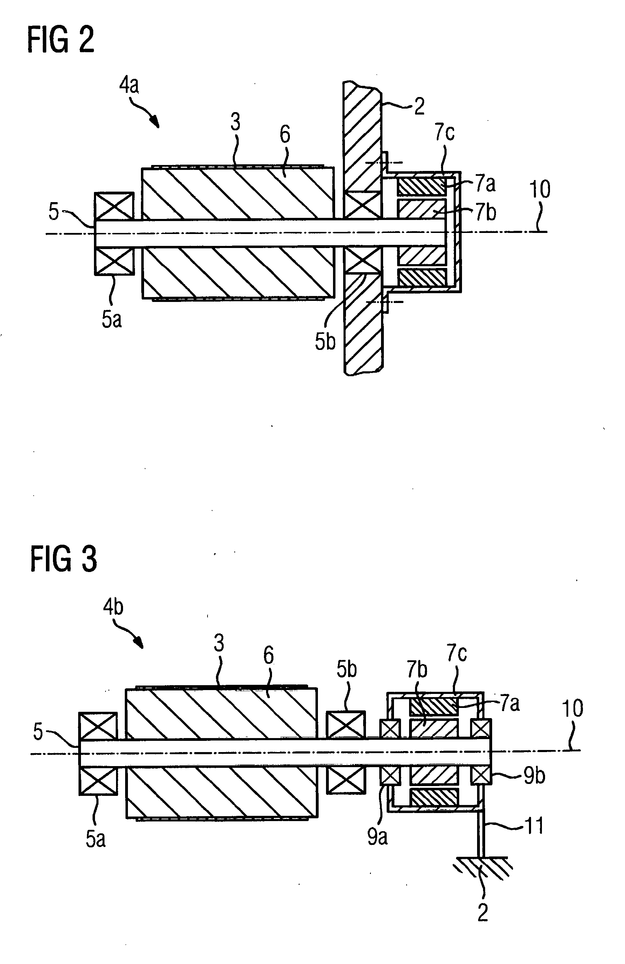

Die nachfolgenden Figuren 2 bis 9 zeigen beispielhaft geeignete Antriebsvorrichtungen für eine erfindungsgemäße Bandförderanlage im Detail.

FIG 2 zeigt schematisch eine erste Antriebsvorrichtung 4a für eine Bandförderanlage im Längsschnitt. Die erste Antriebsvorrichtung 4a umfasst eine Antriebswelle 5, zwei Antriebswellen-Lageranordnungen 5a, 5b, eine Antriebsrolle 6 und einen fremderregten Antriebsmotor 7 in Form eines Frequenzumrichter-gespeisten Wechselstrom-Synchronmotors mit einem Stator 7a und einem Rotor 7b. Die Antriebsrolle 6 ist hier aus Vollmaterial gebildet, kann aber genauso hohl ausgebildet sein. Der Rotor 7b und der Stator 7a befinden sich in einem Motorgehäuse 7c, das mit dem Stator 7a und weiterhin mit der Tragkonstruktion 2 mechanisch fest verbunden ist. Die Antriebswelle 5 und der Antriebsmotor 7 sind getriebelos miteinander verbunden, und wobei eine koaxiale Anordnung von Rotor 7b und Antriebswelle 5 vorliegt. Die Antriebswelle 5 ist durch den Rotor 7b geführt und schließt an der, der Antriebsrolle 6 abgewandten Seite des Rotors 7b mit diesem ab. Die Antriebswelle 5 kann aber genauso über den Rotor 7b hinausragen oder innerhalb des Rotors 7b enden, sofern der Rotor 7b zum größten Teil auf der Antriebswelle 5 sitzt. Der Rotor 7b umschließt die Antriebswelle 5 und ist mechanisch fest mit dieser verbunden, wobei weiterhin die Antriebswelle 5 mit der Antriebsrolle 6 mechanisch fest verbunden ist. Somit bilden der Rotor 7b, die Antriebswelle 5 und die Antriebsrolle 6 eine Einheit, welche um die Antriebswellen-Längsachse 10 rotierbar ist. Diese Bauform der ersten Antriebsvorrichtung 4a ist besonders kompakt und damit platzsparend. Sie ermöglicht die Lagerung von Antriebsrolle 6 und Antriebsmotor 7 mit Hilfe der beiden Antriebswellen-Lageranordnungen 5a, 5b. Das Spaltmaß S (vergleiche FIG 1) zwischen Stator 7a und Rotor 7b wird besonders zuverlässig eingehalten, nachdem die Position von Stator 7a und Rotor 7b im Wesentlichen nur von der Lagerung der Antriebswelle 5 abhängig ist.

FIG 3 zeigt schematisch eine zweite Antriebsvorrichtung 4b für eine Bandförderanlage im Längsschnitt. Die zweite Antriebsvorrichtung 4b umfasst eine Antriebswelle 5, zwei Antriebswellen-Lageranordnungen 5a, 5b, eine Antriebsrolle 6 und einen fremderregten Antriebsmotor 7 in Form eines Frequenzumrichter-gespeisten Wechselstrom-Synchronmotors mit einem Stator 7a und einem Rotor 7b. Die Antriebsrolle 6 ist hier aus Vollmaterial gebildet, kann aber genauso hohl ausgebildet sein. Der Rotor 7b und der Stator 7a befinden sich in einem Motorgehäuse 7c, das mit dem Stator 7a und weiterhin über eine Drehmomentenstütze 11 mit der Tragkonstruktion 2 mechanisch fest verbunden ist. Der Stator 7a ist über das Motorgehäuse 7c mittels Stator-Lageranordnungen 9a, 9b auf der drehbaren Antriebswelle 5 gelagert. Ohne die Drehmomentenstütze 11 wäre der Stator 7a zusammen mit dem Motorgehäuse 7c auf der Antriebswelle 5 drehbar. Die Antriebswelle 5 und der Antriebsmotor 7 sind getriebelos miteinander verbunden, wobei eine koaxiale Anordnung von Rotor 7b und Antriebswelle 5 vorliegt. Die Antriebswelle 5 ist durch den Rotor 7b geführt und ragt über diesen hinaus. Der Rotor 7b umschließt die Antriebswelle 5 und ist mechanisch fest mit dieser verbunden, wobei weiterhin die Antriebswelle 5 mit der Antriebsrolle 6 mechanisch fest verbunden ist. Somit bilden der Rotor 7b, die Antriebswelle 5 und die Antriebsrolle 6 eine Einheit, welche um die Antriebswellen-Längsachse 10 rotierbar ist. Das Spaltmaß S (vergleiche FIG 1) zwischen Stator 7a und Rotor 7b wird besonders zuverlässig eingehalten, nachdem der Antriebsmotor 7 komplett auf die Antriebswelle 5 verlagert ist. Einen zusätzlichen Vorteil dieser Bauform bildet die gute Zugänglichkeit der Lageranordnungen im Wartungsfall.

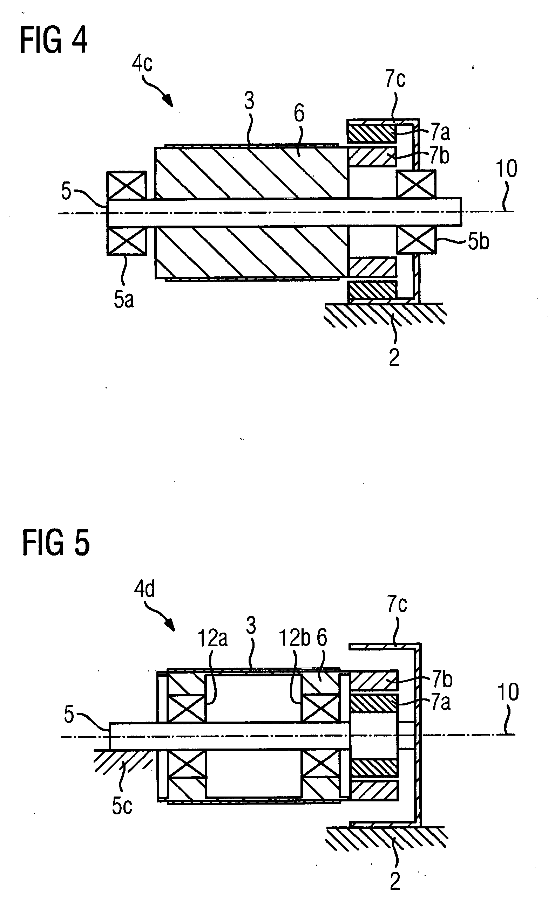

FIG 4 zeigt schematisch eine dritte Antriebsvorrichtung 4c für eine Bandförderanlage im Längsschnitt. Die dritte Antriebsvorrichtung 4c umfasst eine Antriebswelle 5, zwei Antriebswellen-Lageranordnungen 5a, 5b, eine Antriebsrolle 6 und einen fremderregten Antriebsmotor 7 in Form eines Frequenzumrichter-gespeisten Wechselstrom-Synchronmotors mit einem Stator 7a und einem Rotor 7b. Die Antriebsrolle 6 ist hier aus Vollmaterial gebildet, kann aber genauso hohl ausgebildet sein. Der Rotor 7b und der Stator 7a befinden sich in einem Motorgehäuse 7c, das mit dem Stator 7a und weiterhin mit der Tragkonstruktion 2 mechanisch fest verbunden ist. Die Antriebswellen-Lageranordnung 5b ist dabei am Motorgehäuse 7c angeordnet. Die Antriebswelle 5 und der Antriebsmotor 7 sind getriebelos miteinander verbunden, und wobei eine koaxiale Anordnung von Rotor 7b und Antriebswelle 5 vorliegt. Die Antriebswelle 5 ist durch den Rotor 7b geführt und ragt über diesen hinaus. Der Rotor 7b ist seitlich an der Antriebsrolle 6 angeordnet und mechanisch fest mit dieser verbunden. Weiterhin sind die Antriebswelle 5 und die Antriebsrolle 6 mechanisch fest miteinander verbunden. Somit bilden der Rotor 7b, die Antriebswelle 5 und die Antriebsrolle 6 eine Einheit, welche um die Antriebswellen-Längsachse 10 rotierbar ist. Das Spaltmaß S (vergleiche FIG 1) zwischen Stator 7a und Rotor 7b wird besonders zuverlässig eingehalten, nachdem der Antriebsmotor 7 auch hier auf die Antriebswelle 5 verlagert ist. Es sind insgesamt lediglich zwei Lageranordnungen erforderlich. Dies wirkt sich vorteilhaft auf die Verfügbarkeit und Wartung der Lageranordnungen aus. Einen zusätzlichen Vorteil dieser Bauform bildet die gute Zugänglichkeit der Lageranordnungen im Wartungsfall.

FIG 5 zeigt schematisch eine vierte Antriebsvorrichtung 4d für eine Bandförderanlage im Längsschnitt. Die vierte Antriebsvorrichtung 4d umfasst eine Antriebswelle 5, eine Antriebswellen-Lageranordnung 5c, eine Antriebsrolle 6 und einen fremderregten Antriebsmotor 7 in Form eines Frequenzumrichter-gespeisten Wechselstrom-Synchronmotors mit einem Stator 7a und einem Rotor 7b. Der Rotor 7b und der Stator 7a befinden sich in einem Motorgehäuse 7c, das mit der Tragkonstruktion 2 mechanisch fest verbunden ist. Die Antriebswelle 5 ist dabei an ihrem der Antriebswellen-Lageranordnung 5c abgewandten Ende am Motorgehäuse 7c befestigt und ist somit nicht drehbar, sondern feststehend ausgebildet. Der Stator 7a ist auf der feststehenden Antriebswelle 5 und diese umschlie-ßend angeordnet. Die Antriebswellen-Lageranordnung 5c kann in einer bevorzugten Ausführungsform durch die Tragkonstruktion 2 selbst gebildet sein. Die Antriebswelle 5 und der Antriebsmotor 7 sind getriebelos miteinander verbunden, wobei eine koaxiale Anordnung von Rotor 7b, Stator 7a und Antriebswelle 5 vorliegt. Die Antriebswelle 5 ist durch den Rotor 7b geführt und ragt über diesen hinaus. Der Rotor 7b ist seitlich an der Antriebsrolle 6 angeordnet und mechanisch fest mit dieser verbunden. Die mit dem Rotor 7b verbundene Antriebsrolle 6 ist über zwei Antriebsrollen-Lageranordnungen 12a, 12b mit der Antriebswelle 5, welche feststehend ausgebildet ist, verbunden. Somit bilden der Rotor 7b und die Antriebsrolle 6 mit den Antriebsrollen-Lageranordnungen 12a, 12b eine Einheit, welche um die Antriebswelle 5 rotierbar ist. Das Spaltmaß S (vergleiche FIG 1) zwischen Stator 7a und Rotor 7b wird besonders zuverlässig eingehalten, nachdem es im Wesentlichen nur von der Lagerung der Antriebsrolle 6 abhängig ist.

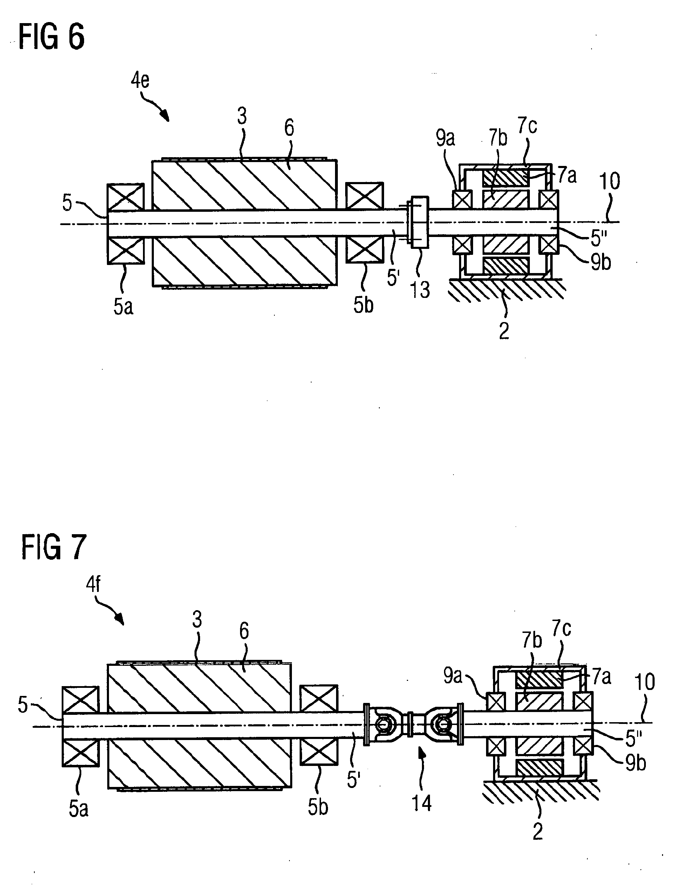

FIG 6 zeigt schematisch eine fünfte Antriebsvorrichtung 4e für eine Bandförderanlage im Längsschnitt. Die fünfte Antriebsvorrichtung 4e ähnelt dabei der zweiten Antriebsvorrichtung 4b gemäß FIG 3. Gleiche Bezugszeichen wie in FIG 3 kennzeichnen gleiche Elemente. Die Antriebsrolle 6 ist hier aus Vollmaterial gebildet, kann aber genauso hohl ausgebildet sein. Im Unterschied zur zweiten Antriebsvorrichtung 4b ist das Motorgehäuse 7c hier direkt mit der Tragkonstruktion 2 verbunden. Die Antriebswelle 5 ist in Längsrichtung zweigeteilt ausgebildet, wobei ein der Antriebsrolle 6 zugeordneter erster Antriebswellenabschnitt 5' und ein dem Antriebsmotor 7 zugeordneter zweiter Antriebswellenabschnitt 5'' vorhanden ist. Der erste Antriebswellenabschnitt 5' und der zweite Antriebswellenabschnitt 5" sind über eine elastische Kupplungseinrichtung 13 miteinander verbunden. Dabei ist die Kupplungseinrichtung 13 hier zur besseren Übersicht in der Seitenansicht und nicht, wie der Rest der fünften Antriebsvorrichtung 4e, im Längsschnitt dargestellt. Die Kupplungseinrichtung 13 ist zwischen einer der Antriebswellen-Lageranordnungen 5b und einer dazu benachbart angeordneten Stator-Lageranordnung 9a angeordnet. Das Spaltmaß S (vergleiche FIG 1) zwischen Stator 7a und Rotor 7b wird auch hier besonders zuverlässig eingehalten, nachdem es im Wesentlichen nur von der Lagerung des zweiten Antriebswellenabschnitts 5'' abhängig ist. Geringfügige Positionsabweichungen des ersten Antriebswellenabschnitts 5' von der Antriebswellen-Längsachse 10 werden aufgrund der elastischen Kupplungseinrichtung 13 toleriert. Einen zusätzlichen Vorteil dieser Bauform bildet die gute Zugänglichkeit der Lageranordnungen im Wartungsfall.

FIG 7 zeigt schematisch eine sechste Antriebsvorrichtung 4f für eine Bandförderanlage im Längsschnitt. Die sechste Antriebsvorrichtung 4f ähnelt dabei der fünften Antriebsvorrichtung 4e gemäß FIG 6. Gleiche Bezugszeichen wie in FIG 6 kennzeichnen gleiche Elemente. Die Antriebsrolle 6 ist hier aus Vollmaterial gebildet, kann aber genauso hohl ausgebildet sein. Im Unterschied zur fünften Antriebsvorrichtung 4e ist anstelle der elastischen Kupplungseinrichtung 13 eine Gelenkeinrichtung 14 vorhanden. Dabei ist die Gelenkeinrichtung 14 hier zur besseren Übersicht in der Seitenansicht und nicht, wie der Rest der sechsten Antriebsvorrichtung 4f, im Längsschnitt dargestellt. Die Gelenkeinrichtung 14 ist zwischen einer der Antriebswellen-Lageranordnungen 5b und einer dazu benachbart angeordneten Stator-Lageranordnung 9a angeordnet. Das Spaltmaß S (vergleiche FIG 1) zwischen Stator 7a und Rotor 7b wird auch hier besonders zuverlässig eingehalten, nachdem es im Wesentlichen nur von der Lagerung des zweiten Antriebswellenabschnitts 5'' abhängig ist. Auch größere Positionsabweichungen des ersten Antriebswellenabschnitts 5' von der Antriebswellen-Längsachse 10 werden aufgrund der Gelenkeinrichtung 14 toleriert. Einen zusätzlichen Vorteil dieser Bauform bildet die gute Zugänglichkeit der Lageranordnungen im Wartungsfall.

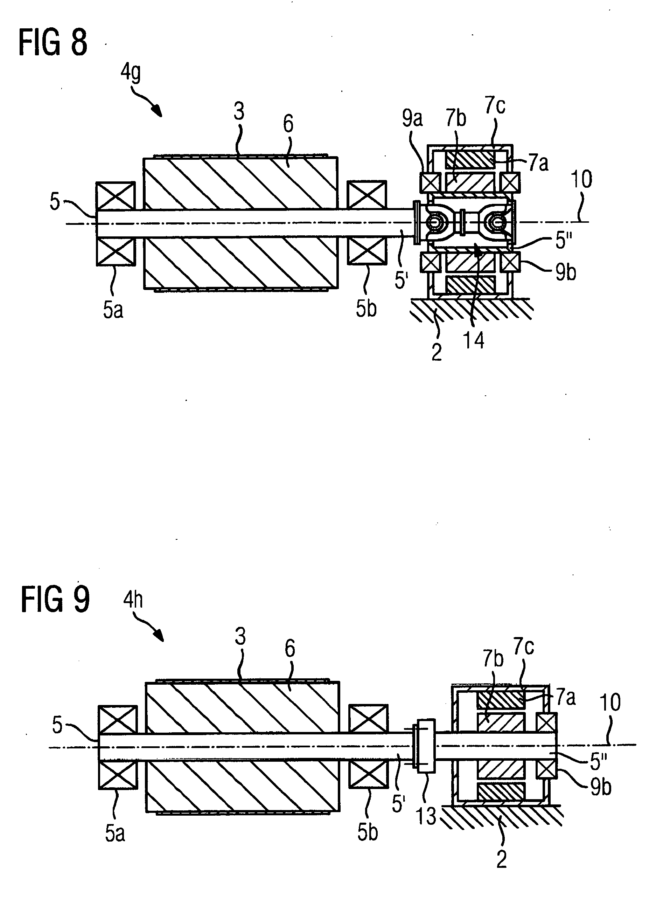

FIG 8 zeigt schematisch eine siebente Antriebsvorrichtung 4g für eine Bandförderanlage im Längsschnitt. Die siebente Antriebsvorrichtung 4g ähnelt dabei der sechsten Antriebsvorrichtung 4f gemäß FIG 7. Gleiche Bezugszeichen wie in FIG 7 kennzeichnen gleiche Elemente. Die Antriebsrolle 6 ist hier aus Vollmaterial gebildet, kann aber genauso hohl ausgebildet sein. Im Unterschied zur sechsten Antriebsvorrichtung 4f ist die Gelenkeinrichtung 14 im Motorgehäuse 7c, bzw. im Wesentlichen zwischen den beiden Stator-Lageranordnungen 9a, 9b angeordnet, wobei sie sich in einem hohlen zweiten Antriebswellenabschnitt 5'' befindet. Dabei ist die Gelenkeinrichtung 14 hier zur besseren Übersicht in der Seitenansicht und nicht, wie der Rest der siebenten Antriebsvorrichtung 4g, im Längsschnitt dargestellt. Diese Bauform bietet neben den Vorteilen der sechsten Ausführungsform weiterhin den Vorteil, dass diese besonders kompakt und platzsparend ist.

FIG 9 zeigt schematisch eine achte Antriebsvorrichtung 4h für eine Bandförderanlage im Längsschnitt. Die achte Antriebsvorrichtung 4h ähnelt dabei der fünften Antriebsvorrichtung 4e gemäß FIG 6. Gleiche Bezugszeichen wie in FIG 6 kennzeichnen gleiche Elemente. Die Antriebsrolle 6 ist hier aus Vollmaterial gebildet, kann aber genauso hohl ausgebildet sein. Das Motorgehäuse 7c ist direkt mit der Tragkonstruktion 2 verbunden. Die Antriebswelle 5 ist in Längsrichtung zweigeteilt ausgebildet, wobei ein der Antriebsrolle 6 zugeordneter erster Antriebswellenabschnitt 5' und ein dem Antriebsmotor 7 zugeordneter zweiter Antriebswellenabschnitt 5'' vorhanden ist. Der erste Antriebswellenabschnitt 5' und der zweite Antriebswellenabschnitt 5'' sind über eine elastische Kupplungseinrichtung 13 miteinander verbunden. Dabei ist die Kupplungseinrichtung 13 hier zur besseren Übersicht in der Seitenansicht und nicht, wie der Rest der achten Antriebsvorrichtung 4h, im Längsschnitt dargestellt. Die Kupplungseinrichtung 13 ist zwischen einer der Antriebswellen-Lageranordnungen 5b und einer dazu benachbart angeordneten Stator-Lageranordnung 9b angeordnet. Im Unterschied zur fünften Antriebsvorrichtung 4e ist hier allerdings nur eine Stator-Lageranordnung 9b vorgesehen. Die Abdichtung zwischen dem zweiten Antriebswellenabschnitt 5'' und dem Motorgehäuse 7c erfolgt auf der, der Kupplungseinrichtung 13 zugewandten Seite des zweiten Antriebswellenabschnitt 5'' durch eine hier nicht im Detail dargestellte Dichtungsanordnung, welche Staub oder sonstige Umwelteinflüsse vom Inneren des Motorgehäuses 7c fernhält. Das Spaltmaß S (vergleiche FIG 1) zwischen Stator 7a und Rotor 7b wird auch hier im Wesentlichen eingehalten. Geringfügige Positionsabweichungen des ersten Antriebswellenabschnitts 5' von der Antriebswellen-Längsachse 10 werden aufgrund der elastischen Kupplungseinrichtung 13 weitgehend toleriert. Einen Vorteil dieser Bauform bildet die gute Zugänglichkeit der Lageranordnungen im Wartungsfall.

Hinsichtlich einer Abdichtung von Lageranordnungen, Antriebsrollen und Antriebsmotor(en) gegenüber Staub und Umwelteinflüssen sind im Hinblick auf die rauen Einsatzbedingungen für die erfindungsgemäße Bandförderanlage, insbesondere in der Schwerindustrie und vor allem bei der Schüttgutförderung, generell erhöhte Anforderungen zu stellen. Bevorzugt werden hier gekapselte Bauarten eingesetzt. Für einen Einsatz der Bandförderanlage unter Tage werden Antriebsmotoren in einer explosionsgeschützten Variante eingesetzt.

Die Figuren 1 bis 9 zeigen lediglich beispielhafte Bandförderanlagen und deren Antriebsvorrichtungen. So kann eine erfindungsgemäße Bandförderanlage auch mehrere Antriebswellen, Antriebsrollen und Antriebsmotoren aufweisen sowie eine große Anzahl an Umlenkrollen oder Umlenkeinrichtungen umfassen.

## Patentansprüche

1. Bandförderanlage (1) für die Schwerindustrie, insbesondere für die Rohstoff- oder Bergbauindustrie, umfassend zumindest eine Tragkonstruktion (2), ein Förderband (3) und mindestens eine Antriebsvorrichtung (4) zum Antrieb des Förderbands (3), wobei die Antriebsvorrichtung (4) mindestens eine Antriebswelle (5), mindestens eine Antriebswellen-Lageranordnung (5a), mindestens eine Antriebsrolle (6) und mindestens einen fremderregten Antriebsmotor (7) in Form eines Frequenzumrichter-gespeisten Wechselstrom-Synchronmotors mit einem Stator (7a) und einem Rotor (7b) umfasst, wobei die Antriebswelle (5) und der mindestens eine Antriebsmotor (7) getriebelos miteinander verbunden sind, und wobei eine koaxiale Anordnung von Rotor (7b) und Antriebswelle (5) vorliegt, **dadurch gekennzeichnet, dass** jede Antriebswelle (5) durch mindestens einen Rotor (7b) geführt ist.

2. Bandförderanlage nach Anspruch 1, **dadurch gekennzeichnet, dass** der Rotor (7b) die Antriebswelle (5) umschließt und mechanisch fest mit dieser verbunden ist, wobei weiterhin die Antriebswelle (5) mit der mindestens einen Antriebsrolle (6) mechanisch fest verbunden ist.

3. Bandförderanlage nach Anspruch 1, **dadurch gekennzeichnet, dass** der Rotor (7b) seitlich an der Antriebsrolle (6) angeordnet und mechanisch fest mit dieser verbunden ist.

4. Bandförderanlage nach Anspruch 3, **dadurch gekennzeichnet, dass** die mit dem Rotor (7b) verbundene Antriebsrolle (6) über mindestens eine Antriebsrollen-Lageranordnung (12a, 12b) mit der Antriebswelle (5), welche feststehend ausgebildet ist, verbunden ist.

5. Bandförderanlage nach Anspruch 4, **dadurch gekennzeichnet, dass** der Stator (7a) auf der feststehenden Antriebswelle (5) angeordnet ist.

6. Bandförderanlage nach Anspruch 3, **dadurch gekennzeichnet, dass** die mit dem Rotor (7b) verbundene Antriebsrolle (6) mechanisch fest mit der Antriebswelle (5) verbunden ist, dass die Antriebswelle (5) mittels der mindestens einen Antriebswellen-Lageranordnung (5a, 5b) drehbar gelagert ist und dass der Stator (7a) mit mindestens einer Antriebswellen-Lageranordnung (5b) mechanisch fest verbunden ist.

7. Bandförderanlage nach Anspruch 2, **dadurch gekennzeichnet, dass** die Antriebswelle (5) mittels der mindestens einen Antriebswellen-Lageranordnung (5a, 5b) drehbar gelagert ist.

8. Bandförderanlage nach Anspruch 7, **dadurch gekennzeichnet, dass** der Stator (7a) mit mindestens einer Antriebswellen-Lageranordnung (5b) mechanisch fest verbunden ist.

9. Bandförderanlage nach Anspruch 7, **dadurch gekennzeichnet, dass** der Stator (7a) mit der Tragkonstruktion (2) mechanisch fest verbunden und weiterhin über mindestens eine Stator-Lageranordnung (9a, 9b) mit der drehbaren Antriebswelle (5) verbunden ist.

10. Bandförderanlage nach Anspruch 9, **dadurch gekennzeichnet, dass** die Antriebswelle (5) in Längsrichtung zweigeteilt ausgebildet ist, wobei ein der Antriebsrolle (6) zugeordneter erster Antriebswellenabschnitt (5') und ein dem Antriebsmotor (7) zugeordneter zweiter Antriebswellenabschnitt (5'') vorhanden ist, welche über eine elastische Kupplungseinrichtung (13) miteinander verbunden sind.

11. Bandförderanlage nach Anspruch 10, **dadurch gekennzeichnet, dass** die Kupplungseinrichtung (13) zwischen einer Antriebswellen-Lageranordnung (5b) und einer dazu benachbart angeordneten Stator-Lageranordnung (9a, 9b) angeordnet ist.

12. Bandförderanlage nach Anspruch 9, **dadurch gekennzeichnet, dass** die Antriebswelle (5) in Längsrichtung zweigeteilt ausgebildet ist, wobei ein der Antriebsrolle (6) zugeordneter erster Antriebswellenabschnitt (5') und ein dem Antriebsmotor (7) zugeordneter zweiter Antriebswellenabschnitt (5'') vorhanden ist, welche über eine Gelenkeinrichtung (14) miteinander verbunden sind.

13. Bandförderanlage nach Anspruch 12, **dadurch gekennzeichnet, dass** die Gelenkeinrichtung (14) zwischen einer Antriebswellen-Lageranordnung (5b) und einer Stator-Lageranordnung (9a) angeordnet ist.

14. Bandförderanlage nach Anspruch 11, **dadurch gekennzeichnet, dass** die Gelenkeinrichtung (14) zwischen zwei Stator-Lageranordnungen (9a, 9b) angeordnet ist.

15. Bandförderanlage nach einem der Ansprüche 1 bis 14, **dadurch gekennzeichnet, dass** die Tragkonstruktion (2) zumindest teilweise durch ein Traggerüst gebildet ist, welches mindestens eine Transporteinrichtung (8) zur Veränderung der örtlichen Position der Bandförderanlage (1) umfasst.

16. Bandförderanlage nach Anspruch 15, **dadurch gekennzeichnet, dass** die Transporteinrichtung (8) Kufen und/oder Räder umfasst.

17. Bandförderanlage nach Anspruch 16, **dadurch gekennzeichnet, dass** die Räder mittels mindestens eines, am Traggerüst angebrachten Antriebsmoduls antreibbar sind.

18. Bandförderanlage nach einem der Ansprüche 15 bis 17, **dadurch gekennzeichnet, dass** die mindestens eine Transporteinrichtung (8) ein Raupenfahrwerk umfasst.

19. Verfahren zum Betreiben einer Bandförderanlage (1) nach einem der Ansprüche 1 bis 18, wobei das Förderband (3) mit einer Fördergeschwindigkeit von kleiner als 13 m/s betrieben wird.

20. Verfahren nach Anspruch 19, wobei die örtliche Position der Bandförderanlage (1) mittels der mindestens einen Transporteinrichtung (8) verändert wird.

21. Verwendung einer Bandförderanlage (1) nach einem der Ansprüche 1 bis 18 in der Rohstoff- oder Bergbauindustrie zum Fördern von Material mit einer Geschwindigkeit von kleiner als 13 m/s.

## Claims

1. Conveyor belt assembly (1) for heavy industry, in particular for the extractive or mining industry, including at least one supporting structure (2), a conveyor belt (3) and at least one drive apparatus (4) for driving the conveyor belt (3), wherein the drive apparatus (4) includes at least one drive shaft (5), at least one drive shaft bearing arrangement (5a), at least one drive roller (6) and at least one separately excited drive motor (7) in the form of a frequency converter-fed AC synchronous motor with a stator (7a) and a rotor (7b), wherein the drive shaft (5) and the at least one drive motor (7) are connected in a gearless manner to one another, and wherein a coaxial arrangement of rotor (7b) and drive shaft (5) exists, **characterised in that** each drive shaft (5) is guided by at least one rotor (7b).

2. Conveyor belt assembly according to claim 1, **characterised in that** the rotor (7b) encloses the drive shaft (5) and is permanently mechanically connected hereto, wherein the drive shaft (5) is furthermore permanently mechanically connected to the at least one drive roller (6).

3. Conveyor belt assembly according to claim 1, **characterised in that** the rotor (7b) is arranged laterally on the drive roller (6) and is permanently mechanically connected hereto.

4. Conveyor belt assembly according to claim 3, **characterised in that** the drive roller (6) connected to the rotor (7b) is connected to the drive shaft (5) by way of at least one drive roller bearing arrangement (12a, 12b), which is embodied to be stationary.

5. Conveyor belt assembly according to claim 4, **characterised in that** the stator (7a) is arranged on the stationary drive shaft (5) .

6. Conveyor belt assembly according to claim 3, **characterised in that** the drive roller (6) connected to the rotor (7b) is permanently mechanically connected to the drive shaft (5), that the drive shaft (5) is rotatably mounted by means of the at least one drive shaft bearing arrangement (5a, 5b) and the stator (7a) is permanently mechanically connected to at least one drive shaft bearing arrangement (5b).

7. Conveyor belt assembly according to claim 2, **characterised in that** the drive shaft (5) is rotatably mounted by means of the at least one drive shaft bearing arrangement (5a, 5b).

8. Conveyor belt assembly according to claim 7, **characterised in that** the stator (7a) is permanently mechanically connected to at least one drive shaft bearing arrangement (5b).

9. Conveyor belt assembly according to claim 7, **characterised in that** the stator (7a) is permanently mechanically connected to the supporting structure (2) and is further connected via at least one stator bearing arrangement (9a, 9b) to the rotatable drive shaft (5).

10. Conveyor belt assembly according to claim 9, **characterised in that** the drive shaft (5) is embodied to be split in the longitudinal direction, wherein a first drive shaft section (5') assigned to the drive roller (6) and a second drive shaft section (5'') assigned to the drive motor (7) is present, which are connected to one another by way of an elastic coupling facility (13) .

11. Conveyor belt assembly according to claim 10, **characterised in that** the coupling facility (13) is arranged between a drive shaft bearing arrangement (5b) and a stator bearing arrangement (9a, 9b) arranged adjacent thereto.

12. Conveyor belt assembly according to claim 9, **characterised in that** the drive shaft (5) is embodied to be split in the longitudinal direction, wherein a first drive shaft section (5') assigned to the drive roller (6) and a second drive shaft section (5'') assigned to the drive motor (7) is present, which are connected to one another by way of a hinge facility (14).

13. Conveyor belt assembly according to claim 12, **characterised in that** the hinge facility (14) is arranged between a drive shaft bearing arrangement (5b) and a stator bearing arrangement (9a).

14. Conveyor belt assembly according to claim 11, **characterised in that** the hinge facility (14) is arranged between two stator-bearing arrangements (9a, 9b).

15. Conveyor belt assembly according to one of claims 1 to 14, **characterised in that** the supporting structure (2) is formed at least partly by a supporting frame, which includes at least one transport facility (8) for changing the spatial position of the conveyor belt assembly (1).

16. Conveyor belt assembly according to claim 15, **characterised in that** the transport facility (8) includes runners and/or wheels.

17. Conveyor belt assembly according to claim 16, **characterised in that** the wheels can be driven by means of at least one drive module attached to the supporting frame.

18. Conveyor belt assembly according to one of claims 15 to 17, **characterised in that** the at least one transport facility (8) includes a track assembly.

19. Method for operating a conveyor belt assembly (1) according to one of claims 1 to 18, wherein the conveyor belt (3) is operated with a conveying speed of less than 13 m/s.

20. Method according to claim 19, wherein the local position of the conveyor belt assembly (1) is changed by means of the at least one transport facility (8).

21. Use of a conveyor belt assembly (1) as claimed in one of claims 1 to 18 in the extractive or mining industry for conveying material at a speed of less than 13 m/s.

## Revendications

1. Installation ( 1 ) de transport par bande pour l'industrie lourde, notamment pour l'industrie des matières premières ou pour l'industrie minière, comprenant au moins une structure ( 2 ) porteuse, une bande ( 3 ) convoyeuse et au moins un dispositif ( 4 ) d'entraînement pour l'entraînement de la bande ( 3 ) convoyeuse, le dispositif ( 4 ) d'entraînement comprenant au moins un arbre ( 5 ) d'entraînement, au moins un dispositif ( 5a ) de palier d'arbre d'entraînement, au moins un rouleau ( 6 ) d'entraînement et au moins un moteur ( 7 ) d'entraînement à excitation séparée, sous la forme d'un moteur synchrone en courant alternatif, alimenté par un convertisseur de fréquence et ayant un stator ( 7a ) et un rotor ( 7b ), l'arbre ( 5 ) d'entraînement et le au moins un moteur ( 7 ) d'entraînement étant reliés entre eux sans transmission et il y a une disposition co-axiale du rotor ( 7b ) et de l'arbre ( 5 ) d'entraînement, **caractérisée en ce que** chaque arbre ( 5 ) d'entraînement passe dans au moins un rotor ( 7b ).

2. Installation de transport par bande suivant la revendication 1, **caractérisée en ce que** le rotor ( 7b ) entoure l'arbre ( 5 ) d'entraînement et lui est relié d'une manière fixe mécaniquement, l'arbre ( 5 ) d'entraînement étant en outre relié d'une manière fixe mécaniquement au au moins un rouleau ( 6 ) d'entraînement.

3. Installation de transport par bande suivant la revendication 1, **caractérisée en ce que** le rotor ( 7b ) est disposé latéralement au rouleau ( 6 ) d'entraînement et lui est relié d'une manière fixe mécaniquement.

4. Installation de transport par bande suivant la revendication 3, **caractérisée en ce que** le rouleau ( 6 ) d'entraînement, relié au rotor ( 7b ), est relié par au moins un dispositif ( 12a, 12b ) de palier de rouleau d'entraînement à l'arbre ( 5 ) d'entraînement, lequel est constitué de manière fixe.

5. Installation de transport par bande suivant la revendication 4, **caractérisée en ce que** le stator ( 7a ) est monté sur l'arbre ( 5 ) d'entraînement fixe.

6. Installation de transport par bande suivant la revendication 3, **caractérisée en ce que** le rouleau ( 6 ) d'entraînement, relié au rotor ( 7b ), est relié de manière fixe mécaniquement à l'arbre ( 5 ) d'entraînement, **en ce que** l'arbre ( 5 ) d'entraînement est monté tournant au moyen du au moins un dispositif ( 5a, 5b ) de palier d'arbre d'entraînement et **en ce que** le stator ( 7a ) est relié d'une manière fixe mécaniquement au au moins un dispositif ( 5b ) de palier d'arbre d'entraînement.

7. Installation de transport par bande suivant la revendication 2, **caractérisée en ce que** l'arbre ( 5 ) d'entraînement est monté tournant au moyen du au moins un dispositif ( 5a, 5b ) de palier d'arbre d'entraînement.

8. Installation de transport par bande suivant la revendication 7, **caractérisée en ce que** le stator ( 7a ) est relié d'une manière fixe mécaniquement au au moins un dispositif ( 5b ) de palier d'arbre d'entraînement.

9. Installation de transport par bande suivant la revendication 7, **caractérisée en ce que** le stator ( 7a ) est relié d'une manière fixe mécaniquement à la structure ( 2 ) porteuse et est relié en outre à l'arbre ( 5 ) d'entraînement tournant par au moins un dispositif ( 9a, 9b ) de palier de stator.

10. Installation de transport par bande suivant la revendication 9, **caractérisée en ce que** l'arbre ( 5 ) d'entraînement est divisé en deux parties dans la direction longitudinale, dans lequel il y a un premier tronçon ( 5' ) d'arbre d'entraînement associé au rouleau ( 6 ) d'entraînement et un deuxième tronçon ( 5" ) d'arbre d'entraînement associé au moteur ( 7 ) d'entraînement, qui sont reliés entre eux par un dispositif ( 13 ) d'accouplement élastique.

11. Installation de transport par bande suivant la revendication 10, **caractérisée en ce que** le dispositif ( 13 ) d'accouplement est disposé entre un dispositif ( 5b ) de palier d'arbre d'entraînement et un dispositif ( 9a, 9b ) de palier de stator, disposé au voisinage de celui-ci.

12. Installation de transport par bande suivant la revendication 9, **caractérisée en ce que** l'arbre ( 5 ) d'entraînement est subdivisé en deux parties dans la direction longitudinale, dans lequel il y a un premier tronçon ( 5' ) d'arbre d'entraînement associé au rouleau ( 6 ) d'entraînement et un deuxième tronçon ( 5" ) d'arbre d'entraînement associé au moteur ( 7 ) d'entraînement, qui sont reliés entre eux par un dispositif ( 14 ) d'articulation.

13. Installation de transport par bande suivant la revendication 12, **caractérisée en ce que** le dispositif ( 14 ) d'articulation est disposé entre un dispositif ( 5b ) de palier d'arbre d'entraînement et un dispositif ( 9a ) de palier de stator.

14. Installation de transport par bande suivant la revendication 11, **caractérisée en ce que** le dispositif ( 14 ) d'articulation est disposé entre deux dispositifs ( 9a, 9b ) de palier de stator.

15. Installation de transport par bande suivant l'une des revendications 1 à 14, **caractérisée en ce que** la structure ( 2 ) porteuse est formée, au moins en partie, par un cadre porteur, qui comprend au moins un dispositif ( 8 ) de transport, pour modifier la position dans l'espace de l'installation ( 1 ) de transport par bande.

16. Installation de transport par bande suivant la revendication 15, **caractérisée en ce que** le dispositif ( 8 ) de transport comprend des patins et/ou des roues.

17. Installation de transport par bande suivant la revendication 16, **caractérisée en ce que** les roues peuvent être entraînées au moyen d'au moins un module d'entraînement mis sur le cadre porteur.

18. Installation de transport par bande suivant l'une des revendications 15 à 17, **caractérisée en ce que** le au moins un dispositif ( 8 ) de transport comprend une chenillette.

19. Procédé pour faire fonctionner une installation ( 1 ) de transport par bande suivant l'une des revendications 1 à 18, dans lequel on fait fonctionner la bande ( 3 ) convoyeuse à une vitesse de convoyage plus petite que 13 m/s.

20. Procédé suivant la revendication 19, dans lequel on modifie la position dans l'espace de l'installation ( 1 ) de transport par bande, au moyen du au moins un dispositif ( 8 ) de transport.

21. Utilisation d'une installation ( 1 ) de transport par bande suivant l'une des revendications 1 à 18, dans l'industrie des matières premières ou dans l'industrie minière, pour le transport de matériaux, à une vitesse plus petite que 13 m/s.
